# EUROPÄISCHE PATENTSCHRIFT

(11) **EP 2 978 042 B1**
(45) Veröffentlichungstag und Bekanntmachung des Hinweises auf die Patenterteilung: **29.06.2016**
(21) Anmeldenummer: 14177887.8
(22) Anmeldetag: 21.07.2014
(51) Int. Cl.: H01M 2/06, H01M 2/30

(54) **Batteriezelle für eine Batterie, insbesondere Traktionsbatterie**
Battery cell for a battery, in particular traction battery
Élément de batterie pour une batterie, en particulier batterie de propulsion

(43) Veröffentlichungstag der Anmeldung: 27.01.2016
(73) Patentinhaber: HOPPECKE Batterien GmbH & Co. KG., 59929 Brilon (DE)
(72) Erfinder: Kesper, Heinrich, 34508 Willingen (DE)
(74) Vertreter: Stenger Watzke Ring

(56) Entgegenhaltungen:
- WO-A1-90/05999
- DE-A1- 2 514 508
- DE-B1- 2 833 416
- US-B1- 6 312 852

## Beschreibung

Die Erfindung betrifft eine Batteriezelle für eine Batterie, insbesondere eine Traktionsbatterie, mit einem einseitig offenen Gehäusekasten und einem die offene Gehäusekastenseite fluiddicht verschließenden Gehäusedeckel sowie mit einem im Gehäusekasten angeordneten Elektrodenplattenpaket, das einen Anschlusspol aufweist, der eine von dem Gehäusedeckel bereitgestellte Öffnung durchgreift.

Batteriezellen der vorbeschriebenen Art einerseits sowie Traktionsbatterien, die über eine Mehrzahl von miteinander elektrisch verschalteten Batteriezellen verfügen andererseits sind aus dem Stand der Technik an sich gut bekannt, weshalb es eines gesonderten druckschriftlichen Nachweises an dieser Stelle nicht bedarf.

Als nicht stationäre Batterien finden Traktionsbatterien typischerweise in der Fahrzeugtechnik Verwendung, beispielsweise bei Gabelstaplern, Hubwagen und/oder dergleichen. Vorbekannte Traktionsbatterien verfügen über eine Mehrzahl von miteinander elektrisch verschalteten Batteriezellen. Es kommen typischerweise je nach gewünschter Ausgangsspannung 12 Zellen (für 24 Volt), 24 Zellen (für 48 Volt) oder 40 Zellen (für 80 Volt) zum Einsatz.

Dabei verfügt jede Batteriezelle über ein einen Gehäusekasten bereitstellendes Zellengehäuse, welcher Gehäusekasten einerseits einen Elektrolyten sowie andererseits einander abwechselnd positive und negative Elektrodenplatten aufnimmt, welche Elektrodenplatten zusammen ein Elektrodenplattenpaket bilden. Im endmontierten Zustand ist die offene Gehäusekastenseite des Zellengehäuses elekrolytdicht mittels eines Gehäusedeckels verschlossen.

Für eine elektrische Verschaltung und/oder Kontaktierung der Batteriezelle dienen Anschlusspole, die vom Elektrodenplattenpaket ausgehen und durch vom Gehäusedeckel bereitgestellte Öffnungen hindurchgeführt sind. Dabei sind die Öffnungen für eine elektrolytdichte Poldurchführung mit einer weichelastischen Dichtmanschette ausgerüstet, die sich im endmontierten Zustand an den jeweiligen Anschlusspol außenseitig anlegt. Es findet mithin eine Abdichtung zwischen Gehäusedeckel einerseits und Anschlusspolen andererseits aufgrund von Dichtmanschetten statt, wobei je Anschlusspol eine Dichtmanschette vorgesehen ist.

Obgleich sich die vorbeschriebene Konstruktion im alltäglichen Praxiseinsatz bewährt hat, ist sie nicht frei von Nachteilen, und so ist insbesondere die Dichtwirkung zwischen einer Dichtmanschette einerseits und dem zugehörigen Anschlusspol andererseits nicht dauerhaft zufriedenstellend. Dies ist dadurch bedingt, dass die geometrischen Abmessungen der Einzelbauteile, insbesondere der Anschlusspole, des Gehäusedeckels und der davon bereitgestellten Poldurchtrittsöffnungen fertigungsbedingt toleranzbehaftet sind und deshalb variieren können. So ist der Abstand zwischen den vom Elektrodenplattenpaket bereitgestellten Anschlusspolen zwar vorgegeben, variiert aber zum Teil um einige Millimeter, was dazu führen kann, dass im endmontierten Zustand Teilabschnitte der Anschlusspole etwas fester an die sie jeweils umgebende Dichtmanschette gedrückt werden, wohingegen andere Polabschnitte etwas weniger fest an die jeweils zugehörige Dichtmanschette gepresst werden, so dass unterschiedliche Dichtwirkungen mit Bezug auf den Umfangsdurchmesser eines Anschlusspols zustandekommen. Hinzu kommt, dass die Anschlusspole auch im Sinne windschiefer Geraden versetzt zueinander ausgerichtet sein können, was ebenfalls zu einem ungleichmäßigen Anliegen der jeweiligen Dichtmanschette am zugehörigen Anschlusspol führen kann. Auch hierdurch bedingt können ungewollte Undichtigkeiten bereits nach Ablauf einer nur kurzen Nutzungsdauer der Batteriezelle eintreten.

Ein Weiteres gilt es in diesem Zusammenhang zu berücksichtigen. Als Elektrolyt findet typischerweise Schwefelsäure Verwendung, insbesondere bei Bleiakkumulatoren. Dabei besteht die besondere Schwierigkeit darin, dass Schwefelsäure vergleichsweise hohe Kapillarwirkungen mit sich bringt, so dass der Elektrolyt mit der Zeit auch kleinste Ritzen und Spalten durchwandert. Etwaige Ungenauigkeiten im Anliegen der Dichtmanschette am zugehörigen Anschlusspol wirken sich deshalb entsprechend undichtigkeitsverschärfend aus.

Die US 6,312,852 B1 betrifft einen Deckel eines Batteriekastens, der zum Zwecke der Poldurchführung einstückig damit ausgebildete Hülsen aufweist. Dabei sind die Hülsen unter Ausbildung einer flexiblen Verbindung relativ bewegbar zum eigentlichen Gehäusedeckel ausgebildet. Im endmontierten Zustand nehmen die Hülsen jeweils eine Anschlussbuchse auf, die entweder in die Hülse eingegossen sein kann oder unter Zwischenordnung eines eingegossenen Epoxidharzes mit der Hülse verbunden ist. Auch dies löst die o. g. Probleme nicht befriedigend und erhöht den Fertigungsaufwand.

Es ist ausgehend vom Vorgeschriebenen die Aufgabe der Erfindung, eine Batteriezelle bereitzustellen, die konstruktionsbedingt eine verbesserte Dichtwirkung zwischen Gehäusedeckel und Anschlusspolen bereitstellt.

Zur Lösung dieser Aufgabe wird mit der Erfindung eine Batteriezelle der eingangs genannten Art vorgeschlagen, die sich dadurch auszeichnet, dass der Anschlusspol eine Kappe trägt, die polseitig ein Dichtelement bereitstellt und die gehäusedeckelseitig mit dem Gehäusedeckel verschweißt ist.

Nach der erfindungsgemäßen Konstruktion kommt eine Kappe zum Einsatz, und zwar je Anschlusspol eine Kappe. Im endmontierten Zustand ist der Anschlusspol unter Zwischenordnung der zugehörigen Kappe durch die jeweilige vom Gehäusedeckel bereitgestellte Öffnung hindurchgeführt. Dabei übernimmt die Kappe zwei Funktionen. Zum einen stellt sie ein Dichtelement bereit, und zwar polseitig. Zwischen Kappe einerseits und Anschlusspol andererseits ist mithin ein Dichtelement angeordnet, das für ein elektrolytdichtes Anliegen des Anschlusspols an der Innenoberfläche der Kappe sorgt. Zum anderen ist die Kappe gehäuseseitig mit dem Gehäusedeckel verschweißt, das heißt stoffschlüssig verbunden, mithin elektrolytdicht an den Gehäusedeckel angeschlossen.

Der besondere Vorteil der erfindungsgemäßen Ausgestaltung liegt darin, dass die als Hilfselement dienende Kappe etwaige Fertigungstoleranzen in Relation zum Gehäusedeckel ausgleicht, wobei dieser Ausgleich im Unterschied zum vorerläuterten Stand der Technik nicht die Position des Dichtelements betrifft, sondern allein die relative Lage der Kappe zum Gehäusedeckel. Nach einer erfolgten Ausrichtung steht die Kappe quasi kraft- beziehungsweise spannungsfrei zum Gehäusedeckel und es kann eine Verschweißung von Kappe und Gehäusedeckel stattfinden. Im Unterschied zum Stand der Technik werden also etwaige Lagetoleranzen durch eine verändert zu setzende Schweißnaht korrigiert, und nicht etwa dadurch, dass sich die relative Lage des Dichtelements zum jeweiligen Anschlusspol verändert.

Im Ergebnis der erfindungsgemäßen Ausgestaltung ergibt sich eine dauerhaft zuverlässige Abdichtung zwischen dem Dichtelement und dem Pol, das heißt der das Dichtelement tragenden Kappe und dem Anschlusspol einerseits sowie der Kappe und dem Gehäusedeckel andererseits, wobei die Dichtigkeit zwischen Kappe und Gehäusedeckel durch die Verschweißung erzeugt ist.

Die vorbeschriebene Konstruktion der Anschlusspolabdichtung erbringt zudem den Vorteil, dass die Anschlusspole nach dem sogenannten COS-Verfahren (Cast on Strip-Verfahren) hergestellt werden können. Gemäß diesem Verfahren wird in eine Gießform flüssiges Blei eingegeben, wobei die Gießform sowohl den Pol als auch die den Pol tragende Brücke im Negativen wiedergibt. Vorkonfektionierte Elektroden werden mit ihren Fahnen voran in das flüssige Blei der Gießform getaucht und es wird die Aushärtung des Bleimaterials abgewartet. Im Ergebnis dieser Verfahrensdurchführung steht eine einstückig mit den Fahnen der Elektroden ausgebildete Baukomponente, die sowohl die die Fahnen der einzelnen Elektroden miteinander verbindende Brücke als auch den einstückig an der Brücke angeordneten Pol bereitstellt. Die so vorbereiteten Elektroden können dann samt daran ausgebildetem Pol in den Gehäusekasten des Gehäuses eingebracht werden.

Die Herstellung nach dem COS-Verfahren ist in vorteilhafter Weise einfach in der Handhabung und zudem preisgünstig. Die mit der Erfindung vorgeschlagene Polabdichtung lässt sich in vorteilhafter Weise mit nach dem COS-Verfahren vorbereiteten Elektroden kombinieren, so dass sich insoweit ein synergetischer Effekt ergibt, da die erfindungsgemäße Ausgestaltung nicht nur eine verbesserte Polabdichtung bereitstellt, sie ermöglicht zudem eine einfache und preisgünstige Herstellung.

Gemäß einer bevorzugten Ausführungsform der Erfindung ist vorgesehen, dass die Kappe außenumfangsseitig einen umlaufenden Stützsteg aufweist, auf dem der Gehäusedeckel aufliegt. Mit dem Stützsteg untergreift die Kappe die Randkante der zur Poldurchführung im Gehäusedeckel vorgesehenen Öffnung. Es findet mithin eine Abstützung des Gehäusedeckels statt. Dabei liegt der Stützsteg mit seiner gehäusedeckelseitig ausgebildeten Stirnfläche bevorzugterweise am Gehäusedeckel an. Zum einen wird hierdurch eine zusätzliche Stabilisierung von Kappe und Gehäusedeckel erreicht, zum anderen können so verbessert etwaige Lagetoleranzen zwischen Kappe und Gehäusedeckelöffnung ausgeglichen werden, denn ein Verschweißen findet bevorzugterweise deckelunterseitig zwischen Stützsteg und Gehäusedeckel statt.

Die Kappe und das Dichtelement sind bevorzugterweise als einstückiges Bauteil ausgebildet. Dies vereinfacht die Herstellung, insbesondere Montage der erfindungsgemäßen Batteriezelle.

Die Kappe besteht aus Kunststoff, vorzugsweise aus Polypropylen. Auch der Gehäusedeckel der Batteriezelle besteht aus Polypropylen, was ein Verschweißen der Kappe mit dem Gehäusedeckel vereinfacht.

Als Dichtelement kann ein O-Ring oder eine Dichtmanschette zum Einsatz kommen. Diese besteht aus Kunststoff, vorzugsweise einem thermoplastischen Elastomer, was besonders gute Dichteigenschaften mit sich bringt.

Zur Bereitstellung eines einstückigen Bauteils kann das Dichtelement in die Kappe eingespritzt oder in diese eingeklebt sein.

Gemäß einem weiteren Merkmal der Erfindung ist vorgesehen, dass die Kappe zweiteilig ausgebildet ist und einen mit dem Gehäusedeckel verschweißten ersten Teil sowie einen vom ersten Teil axial beabstandeten zweiten Teil aufweist, wobei zwischen dem ersten und dem zweiten Teil eine elastisch ausgebildete Verbindungsbrücke ausgebildet ist. Gemäß dieser Konstruktion ist es dem zweiten Teil der Kappe gestattet, in Axialrichtung, das heißt in Höhenrichtung der Kappe eine Relativbewegung zum ersten Teil der Kappe, das heißt dem mit dem Gehäusedeckel verschweißten Teil der Kappe zu vollführen. Diese relative Beweglichkeit des zweiten Teils der Kappe ermöglicht in vorteilhafter Weise einen Längenausgleich, was hilft, sogenannten Weißbruch am Gehäusedeckel zu vermeiden.

Im Laufe der Lebensdauer einer Batterie kann es durch interkristalline Korrosion zu einem Wachsen der positiven Platten in Höhenrichtung kommen. Infolge dessen drückt der Anschlusspol der positiven Platten von unten gegen den Gehäusedeckel. Dies kann zum sogenannten Weißbruch führen, bei dem es sich um mikroskopisch kleine Bereiche handelt, deren Begrenzungsflächen mit einzelnen extrem verstreckten Materialstrengen überbrückt sind und die durch eine milchig weiße Verfärbung erkennbar werden. Weißbruch ist insofern eine Vorschädigung des Materials und kann der Beginn eines vollständigen Materialbruches sein. Um hier gegenzuwirken, wird mit der Erfindung die zweiteilige Ausgestaltung der Kappe vorgeschlagen. Dabei sind die beiden Teile der Kappe über eine elastisch ausgebildete Verbindungsbrücke miteinander gekoppelt. Diese elastische Verbindungsbrücke ermöglicht im Betriebsfall einen Höhenausgleich in Vertikalausrichtung, womit der Pol der positiven Platten unter Vermeidung von Weißbruch auswandern kann.

Gemäß einem weiteren Merkmal der Erfindung ist vorgesehen, dass die Kappe verdrehfest am Anschlusspol angeordnet ist. Dies schützt den Anschlusspol vor einem etwaigen Brückenabriss, insbesondere bei der Ausbildung einer entsprechenden Verschraubung zur Anschlusskabelkontaktierung.

Typischerweise ist zur Kontaktierung eines Anschlusskabels am jeweils zugehörigen Pol vorgesehen, dieses Anschlusskabel mit dem Pol zu verschrauben. Diese Verschraubung erfolgt unter Anlegen eines Drehmoments von zum Beispiel 20 Nm. Das Widerlager für die Schraube bildet der Pol beziehungsweise eine vom Pol aufgenommene Gewindehülse aus einem Buntmaterial. Der Pol stützt sich seinerseits an der Brücke und damit an den zugehörigen Elektrodenplatten ab, wobei die Verbindung der Elektrodenplatten mit der Brücke lediglich über die jeweiligen Fahnen erfolgt, welche eine besondere Schwachstelle darstellen. Bei einer ordnungsgemäßen Befestigung eines Anschlusskabels mittels der zugehörigen Schraube am Pol kann es insbesondere bei vergleichsweise schmalen Batterien, das heißt solchen, die nur über wenige Elektrodenplatten verfügen, dazu kommen, dass sich die mit der Brücke verbundenen Fahnen der einzelnen Elektrodenplatten im Moment der Drehmomenteinleitung verbiegen oder sogar abreißen.

Um diesem Problem zu begegnen, ist mit der Erfindung vorgeschlagen, die Kappe verdrehfest am Pol anzuordnen. Diese verdrehfeste Anordnung sorgt dafür, dass bei einem Eindrehen einer Verbindungsschraube zum Anschluss eines Anschlusskabels das eingeleitete Drehmoment über den verdrehfesten Kontakt von Kappe und Pol in die Kappe und von dort aus über die Verschweißung in den Gehäusedeckel eingeleitet wird. Damit ist die Gefahr von unter Umständen abreißenden Fahnen und/oder Brücken überwunden.

Die verdrehfeste Verbindung von Kappe und Pol kann beispielsweise dadurch ausgebildet werden, dass die Kappe einen in Kappenhöhenrichtung verlaufenden Schlitz aufweist, in den ein schwertähnlich ausgebildeter Vorsprung des Pols eingreift. Es wird so eine formschlüssige Verbindung zwischen Kappe einerseits und Pol andererseits ausgebildet, die in der Lage ist, Drehmomente zu übertragen, so dass ein Ableiten in de Gehäusedeckel beziehungsweise den damit verschweißten Gehäusekasten erfolgen kann. Dabei hat die Ausbildung eines schwertähnlichen Vorsprungs am Pol zudem den Vorteil, dass dieser auch im Rahmen des schon vorbeschriebenen COS-Verfahrens ausgebildet werden kann.

Mit der Erfindung wird insgesamt eine Konstruktion vorgeschlagen, die eine gegenüber dem Stand der Technik deutlich verbesserte Polabdichtung ermöglicht, und dies bei gleichzeitiger Verwendung des COS-Verfahrens zur Polherstellung, wodurch der Einsatz eines einfach durchzuführenden und preisgünstigen Herstellungsverfahrens gestattet ist.

Weitere Merkmale und Vorteile der Erfindung ergeben sich aus der nachfolgenden Beschreibung anhand der Figuren. Dabei zeigen:
- Figur 1: in schematischer Schnittdarstellung eine Batteriezelle nach der Erfindung;
- Figur 2: in einer teilgeschnittenen Seitenansicht einen mit einer Kappe ausgerüsteten Anschlusspol;
- Figur 3: in schematischer Seitenansicht den Anschlusspol nach Figur 2;
- Figur 4: in einer schematischen Seitenansicht die Kappe nach Figur 2;
- Figur 5: in geschnittener Seitenansicht die Kappe nach Figur 4 gemäß Schnittlinie V-V;
- Figur 6: in schematischer Seitenansicht die Kappe nach Figur 4, und zwar im Unterschied zu Figur 4 um 90° gedreht;
- Figur 7: in einer schematischen Seitenansicht ein Dichtelement;
- Figur 8: in geschnittener Seitenansicht das Dichtelement nach Figur 7 gemäß Schnittlinie VIII - VIII und
- Figur 9: in einer schematisch perspektivischen Detailansicht eine Einbausituation.

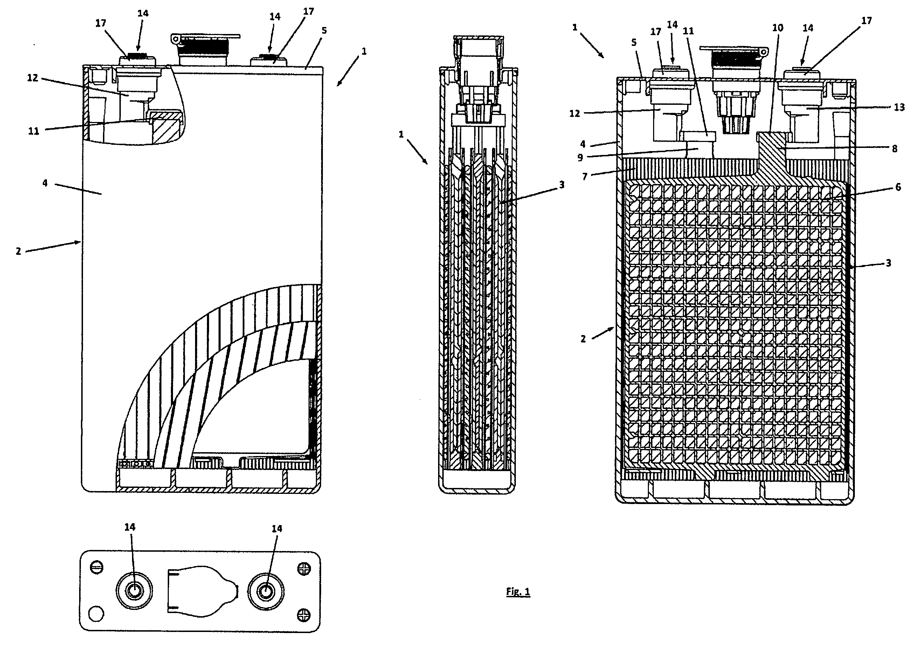

Figur 1 zeigt in schematischer in mehreren Schnittansichten eine Batteriezelle 1 nach der Erfindung.

Die Batteriezelle 1 verfügt über ein Gehäuse 2. Dieses weist einen Gehäusekasten 4 einerseits und einen den Gehäusekasten 4 im endmontierten Zustand fluiddicht verschließenden Gehäusedeckel 5 auf. Der Gehäsuekasten 4 und der Gehäusedeckel 5 sind bevorzugterweise miteinander verschweißt.

Innerhalb des Gehäuses 2 ist ein Elektrodenplattenpaket 3 angeordnet. Dieses besteht aus einander abwechselnd angeordneten positiven Elektrodenplatten 6 einerseits und negativen Elektrodenplatten 7 andererseits. Die Elektrodenplatten 6 bzw. 7 verfügen deckelseitig über Anschlussfahnen, wobei die positiven Elektrodenplatten 6 die Fahnen 8 und die negativen Elektrodenplatten 7 die Fahnen 9 bereitstellen. Mittels einer jeweils gemeinsamen Brücke 10 beziehungsweise 11 sind die Fahnen 8 beziehungsweise 9 elektrisch miteinander gekoppelt. Jede Brücke 10 beziehungsweise 11 trägt einen Anschlusspol 12 beziehungsweise 13, wobei die Brücke 11 der negativen Elektrodenplatten 7 den negativen Anschlusspol 12 und die Brücke 10 der positiven Elektrodenplatten 6 den positiven Anschlusspol 13 tragen.

Die Anschlusspole 12 und 13 durchgreifen entsprechende Öffnungen 26 im Gehäusedeckel 5, so dass sie für eine Anschlusskontaktierung von außerhalb des Gehäuses 2 zugänglich sind. Im gezeigten Ausführungsbeispiel sind Anschlüsse 14 einer nicht näher dargestellten Verkabelung mit den Anschlusspolen 12 beziehungsweise 13 jeweils verschraubt, zu welchem Zweck die Anschlusspole 12 und 13 in Figur 1 nicht näher erkennbare Gewindehülsen 15 bereitstellen.

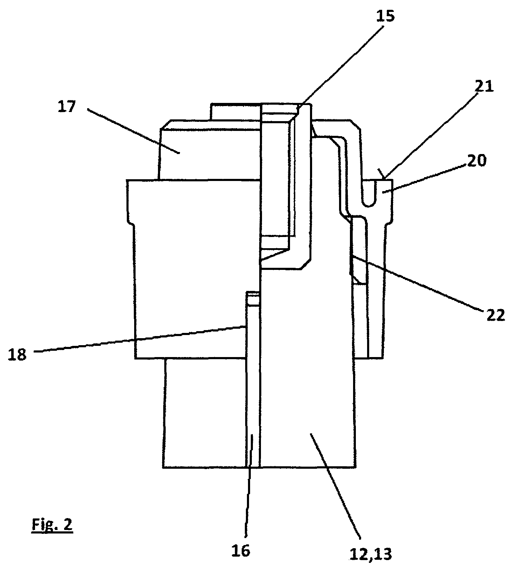

Für einen fluiddichten Poldurchgriff trägt der Anschlusspol 12 beziehungsweise 13 erfindungsgemäß eine Kappe 17, die polseitig ein Dichtelement 22 bereitstellt und die gehäusedeckelseitig mit dem Gehäusedeckel 5 verschweißt ist, welcher Sachzusammenhang sich aus einer Zusammenschau der Figuren 2 bis 9 im Detail ergibt.

Figur 2 lässt einen Anschlusspol 12 beziehungsweise 13 erkennen. Dieser ist aus einem Bleimaterial gegossen. In das Bleimaterial eingegossen ist eine Gewindehülse 15 aus einem Buntmetall. Diese Gewindehülse 15 dient der Aufnahme einer Verbindungsschraube zur elektrischen Kontaktierung des Anschlusspols 12 beziehungsweise 13 mit einem von einem stromführenden Kabel bereitgestellten Anschluss 14.

Der Anschlusspol 12 beziehungsweise 13 trägt eine auf ihn aufgesetzte Kappe 17. Diese Kappe besteht aus einem Kunststoffmaterial, vorzugsweise Polypropylen. Die Kappe 17 ist verdrehfest am Pol 12 beziehungsweise 13 angeordnet, was dadurch erreicht ist, dass der Pol 12 beziehungsweise 13 einen sich radial erstreckenden Vorsprung 16 aufweist, der im gezeigten Ausführungsbeispiel nach Art eines Schwerts ausgebildet ist. Dieser Vorsprung 16 greift formschlüssig in einen von der Kappe 17 bereitgestellten Schlitz 18 ein.

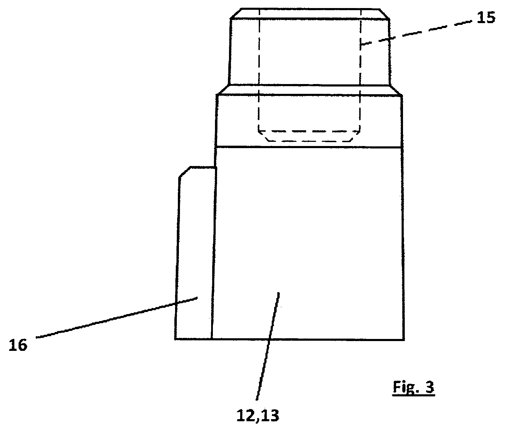

Figur 3 lässt die Ausgestaltung des Vorsprungs 16 im Detail erkennen.

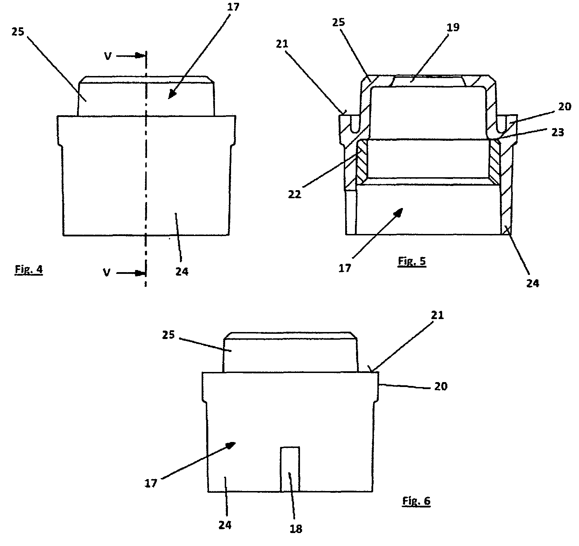

Die Figuren 4 bis 6 zeigen die Kappe 17 im Detail. Wie sich aus diesen Figuren ergibt, verfügt die Kappe 17 über einen ersten Teil 24 und einen zweiten Teil 25. Der zweite Teil 25 liegt im endmontierten Zustand kopfseitig am zugehörigen Anschlusspol 12 bzw. 13 an. Er stellt eine Öffnung 19 bereit, durch die hindurch eine Anschlussschraube zum Einbringen in die Gewindehülse 15 zu führen ist.

Der erste Teil 24 der Kappe 17 stellt umfangsseitig einen umlaufenden Stützsteg 20 bereit. Im endmontierten Zustand liegt der Gehäusedeckel 5 mit seiner Innenseite auf der vom Stützsteg 20 bereitgestellten Stützfläche 21 auf.

Die Kappe 17 nimmt im endmontierten Zustand ein ringförmiges Dichtelement 22 auf, wie sich dies insbesondere aus der Darstellung nach Figur 5 ergibt. Dabei liegt das Dichtelement 22 innenseitig der Kappe 17 lagesicher an einer umlaufenden Schulter 23 an.

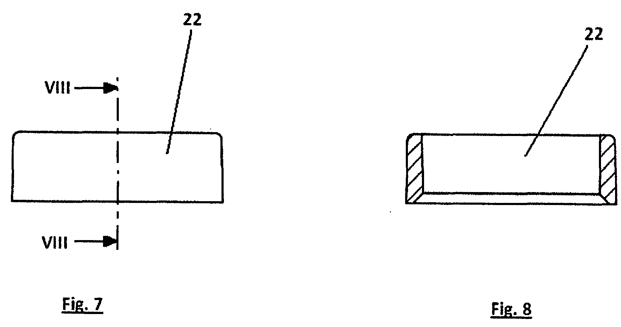

Das Dichtelement 22 ist im Detail in den Figuren 7 und 8 dargestellt. Dieses besteht vorzugsweise aus Kunststoff, und zwar aus einem thermoplastischen Elastomer.

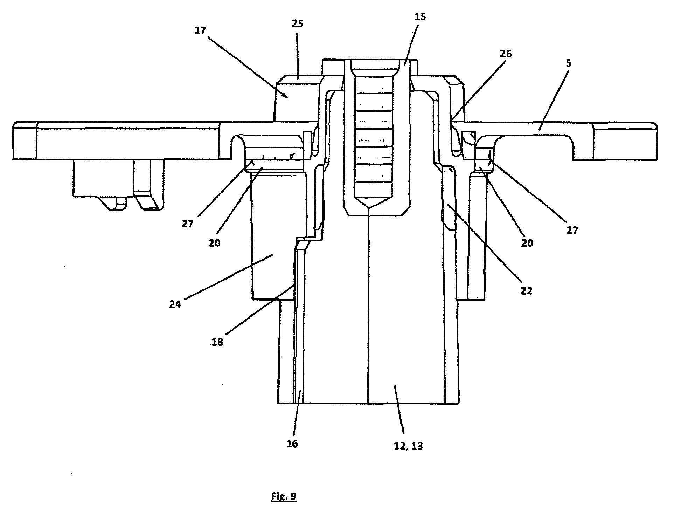

Figur 9 lässt eine Einbausituation erkennen. Die Kappe 17 ist über den Anschlusspol 12 beziehungsweise 13 gestülpt. Sie liegt mit ihrem zweiten Teil 25 kopfseitig am Anschlusspol 12 beziehungsweise 13 lagesicher an und die Gewindehülse 15 durchgreift die vom zweiten Teil 25 der Kappe 17 bereitgestellte Öffnung 19. Der vorzugsweise mit dem Anschlusspol 12 beziehungsweise 13 einstückig ausgebildete Vorsprung 16 greift in den vom zweiten Teil 25 der Kappe 17 bereitgestellten Schlitz 18 ein, womit die Kappe 17 verdrehsicher am Anschlusspol 12 beziehungsweise 13 anliegt.

Das vom ersten Teil 24 der Kappe 17 aufgenommene Dichtelement 22 liegt am Anschlusspol 12 beziehungsweise 13 an, womit ein fluiddichter Abschluss gegeben ist.

Der außenumfangsseitig vom zweiten Teil 25 der Kappe 17 bereitgestellte Stützsteg 20 liegt an einem innenseitig des Gehäusedeckels 5 ausgebildeten Kragen 27 an, wobei der Stützsteg 20 mit dem Kragen 27 fluiddicht verbunden, vorzugsweise verschweißt ist.

Aufgrund des zwischen dem Anschlusspol 12 beziehungsweise 13 und der Kappe 17 angeordneten Dichtelements 22 einerseits und der Verschweißung des Stützstegs 20 der Kappe 17 mit dem Kragen 27 des Gehäusedeckels 5 andererseits ist eine insgesamt fluid- und damit elektrolytdichte Durchführung des Pols 12 beziehungsweise 13 durch die zugehörige Öffnung 26 im Gehäusedeckel 5 erreicht.

Im gezeigten Ausführungsbeispiel bilden der erste Teil 24 und der zweite Teil 25 der Kappe 17 ein einstückiges Bauteil aus. Alternativ zu dieser Ausgestaltung kann vorgesehen sein, dass der erste Teil 24 und der zweite Teil 25 der Kappe 17 jeweils als separate Bauteile ausgebildet sind und axial voneinander beabstandet unter Zwischenordnung einer elastisch ausgebildeten Verbindungsbrücke miteinander gekoppelt sind. Eine solche Ausgestaltung erbringt den Vorteil, dass der obere, zweite Teil 25 der Kappe 17 in Kappenhöhenrichtung auswandern, das heißt sich relativ zum ersten Teil 24 beziehungsweise zum Gehäusedeckel 5 bewegen kann. Dies lässt unter Vermeidung von Weißbruch ein im bestimmungsgemäßen Verwendungsfall nicht zu vermeidendes Wachsen des positiven Anschlusspols 12 zu.

Von besonderem Vorteil der erfindungsgemäßen Ausgestaltung ist, dass etwaige geometrische Toleranzen in der relativen Ausrichtung von Anschlusspolen einerseits und Gehäusedeckel 5 beziehungsweise den davon bereitgestellten Öffnungen 26 andererseits nicht vom Dichtelement 22, sondern durch die Lage der Kappe 17 kompensiert werden. Damit ist eine dauerhaft zuverlässige Abdichtung des Anschlusspols 12 beziehungsweise 13 gegenüber der Kappe 17 mittels des Dichtelements 22 sichergestellt.

**Bezugszeichenliste**

| | | | |
|---|---|---|---|
| 1 | Batterie | 18 | Schlitz |
| 2 | Gehäuse | 19 | Öffnung |
| 3 | Elektrodenplattenpaket | 20 | Stützsteg |
| 4 | Gehäusekasten | 21 | Stützfläche |
| 5 | Gehäusedeckel | 22 | Dichtelement |
| 6 | positive Elektrodenplatte | 23 | Schulter |
| 7 | negative Elektrodenplatte | 24 | erster Teil |
| 8 | Fahne | 25 | zweiter Teil |
| 9 | Fahne | 26 | Öffnung |
| 10 | Brücke | 27 | Kragen |
| 11 | Brücke | | |
| 12 | negativer Anschlusspol | | |
| 13 | positiver Anschlusspol | | |
| 14 | Anschluss | | |
| 15 | Gewindehülse | | |
| 16 | Vorsprung | | |
| 17 | Kappe | | |

## Patentansprüche

1. Batteriezelle für eine Batterie, insbesondere Traktionsbatterie, mit einem einseitig offenen Gehäusekasten (4) und einem die offene Gehäusekastenseite fluiddicht verschließenden Gehäusedeckel (5) sowie mit einem im Gehäusekasten (4) angeordneten Elektrodenplattenpaket (3), das einen Anschlusspol (12, 13) aus einem Bleimaterial aufweist, der eine von dem Gehäusedeckel (5) bereitgestellte Öffnung (26) durchgreift, **dadurch gekennzeichnet, dass** der Anschlusspol (12, 13) eine Kappe (17) aus Kunststoff trägt, dass zwischen Kappe (17) einerseits und Anschlusspol (12, 13) andererseits ein Dichtelement (22) angeordnet ist, wobei das Dichtelement (22) innenseitig der Kappe (17) lagesicher an einer umlaufenen Schulter (23) anliegt, dass die Kappe (17) außenumfangsseitig einen umlaufenden Stützsteg (20) aufweist, auf dem der Gehäusedeckel (5) aufliegt, wobei die Kappe (17) und der Gehäusedeckel (5) im Kontaktbereich von Stützsteg (20) und Gehäusedeckel (5) miteinander verschweißt sind und dass in das Bleimaterial des Anschlusspols (12, 13) eine Gewindehülse (15) aus einem Buntmaterial eingegossen ist, die der Aufnahme einer durch eine von der Kappe (17) bereitgestellte Öffnung (19) hindurchgeführte Anschlussschraube dient.

2. Batteriezelle nach Anspruch 1, **dadurch gekennzeichnet, dass** die Kappe (17) aus Kunststoff, vorzugsweise Polypropylen besteht.

3. Batteriezelle nach Anspruch 1 oder 2, **dadurch gekennzeichnet, dass** das Dichtelement (22) aus Kunststoff, vorzugsweise einem thermoplastischen Elastomer besteht.

4. Batteriezelle nach einem der vorhergehenden Ansprüche, **dadurch gekennzeichnet, dass** die Kappe (17) zweiteilig ausgebildet ist und einen mit dem Gehäusedeckel (5) verschweißten ersten Teil (24) sowie einen vom ersten Teil (24) axial beabstandeten zweiten Teil (25) aufweist, wobei zwischen dem ersten und dem zweiten Teil (24, 25) eine elastisch ausgebildete Verbindungsbrücke angeordnet ist.

5. Batteriezelle nach einem der vorhergehenden Ansprüche, **dadurch gekennzeichnet, dass** die Kappe (17) verdrehfest am Anschlusspol (12, 13) angeordnet ist.

6. Batteriezelle nach Anspruch 5, **dadurch gekennzeichnet, dass** die Kappe (17) einen in Kappenhöhenrichtung verlaufenden Schlitz (18) aufweist, in den ein vom Anschlusspol (12, 13) bereitgestellter Vorsprung (16) eingreift.

7. Batteriezelle nach Anspruch 6, **dadurch gekennzeichnet, dass** der Vorsprung (16) einstückig mit dem Anschlusspol (12, 13) ausgebildet ist.

8. Traktionsbatterie mit einer Mehrzahl von miteinander verschalteten Batteriezellen (1) nach einem der vorhergehenden Ansprüche 1 bis 7.

## Claims

1. A battery cell for a battery, in particular a traction battery, comprising a housing box (4) which is open on one side and a housing cover (5) which closes the open housing box side in a fluid-tight manner as well as an electrode plate packet (3) arranged in the housing box (4), which electrode plate packet comprises a terminal (12, 13) made of a lead material, which passes through an opening provided by the housing cover (5), **characterized in that** the terminal (12, 13) carries a cap (17) made of plastic, that a sealing element (22) is arranged between the cap (17) on the one hand and the terminal (12, 13) on the other hand, wherein the sealing element (22) rests against a circumferential shoulder (23) on the inner side of the cap (17) in a position-safe manner, that the cap (17) comprises a circumferential supporting bar (20) on the outer circumference thereof, on which supporting bar rests the housing cover (5), wherein the cap (17) and the housing cover (5) are welded to each other in the contact area of the supporting bar (20) and the housing cover (5), and that a threaded sleeve (15) made of a coloured material is cast into the lead material of the terminal (12, 13), which threaded sleeve serves to receive a connection bolt passed through an opening (19) provided by the cap (17).

2. A battery cell according to claim 1, **characterized in that** the cap (17) is made of plastic, preferably polypropylene.

3. A battery cell according to claim 1 or 2, **characterized in that** the sealing element (22) is made of plastic, preferably of a thermoplastic elastomer.

4. A battery cell according to one of the preceding claims, **characterized in that** the cap (17) is made of two parts and comprises a first part (24) welded to the housing cover (5) as well as a second part (25) axially spaced from the first part (24), wherein an elastic connection bridge is arranged between the first and the second part (24, 25).

5. A battery cell according to one of the preceding claims, **characterized in that** the cap (17) is arranged on the terminal (12, 13) in a torque-proof manner.

6. A battery cell according to claim 5, **characterized in that** the cap (17) comprises a slot (18) extending in the direction of the height of the cap, in which engages a protrusion (16) provided by the terminal (12, 13).

7. A battery cell according to claim 6, **characterized in that** the protrusion (16) is formed integrally with the terminal (12, 13).

8. A traction battery comprising a plurality of battery cells (1) according to one of the preceding claims 1 through 7, which are interconnected.

## Revendications

1. Elément de batterie pour une batterie, notamment une batterie de traction, comprenant un boîtier de logement (4) ouvert sur un côté et un couvercle de boîtier (5) fermant le côté ouvert du boîtier de logement de manière étanche au fluide ainsi qu'un paquet de plaques d'électrode (3) disposé dans le boîtier de logement (4), lequel paquet comprend une borne terminale (12, 13) en un matériau de plomb qui passe par une ouverture (26) fournie par le couvercle de boîtier (5), **caractérisé en ce que** la borne terminale (12, 13) porte un capuchon (17) en plastique, qu'un élément d'étanchéité (22) est disposé entre le capuchon d'une part et la borne terminale (12, 13) d'autre part, l'élément d'étanchéité (22) s'appuyant contre une épaule circonférentielle (23) sur le côté interne du capuchon (17) de manière fixe en position, que le capuchon (17) comprend, sur le côté de sa circonférence extérieure, une nervure d'appui (20) circonférentielle, sur laquelle reste le couvercle de boîtier (5), le capuchon (17) et le couvercle de boîtier (5) étant soudés l'un à l'autre dans la zone de contact de la nervure d'appui (20) et du couvercle de boîtier (5) et qu'une douille taraudée (15) en un matériau coloré est coulée dans le matériau de plomb de la borne terminale (12, 13), la douille taraudée servant à recevoir une vis de raccordement passée à travers une ouverture (19) fournie par le capuchon (17).

2. Elément de batterie selon la revendication 1, **caractérisé en ce que** le capuchon (17) est fabriqué en plastique, de préférence en polypropylène.

3. Elément de batterie selon la revendication 1 ou la revendication 2, **caractérisé en ce que** l'élément d'étanchéité (22) est en plastique, de préférence en un élastomère thermoplastique.

4. Elément de batterie selon l'une des revendications précédentes, **caractérisé en ce que** le capuchon (17) est réalisé en deux parties et comprend une première partie (24) soudée au couvercle de boîtier (5) ainsi qu'une deuxième partie (25) axialement espacée de la première partie (24), un pont de liaison élastique étant disposé entre la première et la deuxième partie (24, 25).

5. Elément de batterie selon l'une des revendications précédentes, **caractérisé en ce que** le capuchon (17) est disposé sur la borne terminale (12, 13) de manière résistante à la torsion.

6. Elément de batterie selon la revendication 5, **caractérisé en ce que** le capuchon (17) comprend une fente (18) s'étendant dans la direction de la hauteur du capuchon, dans laquelle fente s'engage une saillie (16) fournie par la borne terminale (12, 13).

7. Elément de batterie selon la revendication 6, **caractérisé en ce que** la saillie (16) est formée d'un seul tenant avec la borne terminale (12, 13).

8. Batterie de traction comprenant une pluralité d'éléments de batterie (1) selon l'une des revendications précédentes 1 à 7 connectés les uns aux autres.
